# FASCICULE DE BREVET EUROPEEN

(11) **EP 1 648 146 B1**
(45) Date de publication et mention de la délivrance du brevet: **20.12.2006**
(21) Numéro de dépôt: 05300557.5
(22) Date de dépôt: 05.07.2005
(51) Int. Cl.: H04M 1/04, H04M 1/725, H02J 7/00

(54) **Configuration d'une utilisation d'un téléphone mobile en fonction de la position dans un chargeur**
Konfiguration der Verwendung eines Mobiltelefons in Abhängigkeit der Position in einem Ladegerät
Configuration of the application of a mobile phone depending on the position in a charger

(30) Priorité: 14.10.2004 FR 0452345
(43) Date de publication de la demande: 19.04.2006
(73) Titulaire: SAGEM Communication, 75015 Paris (FR)
(72) Inventeur: Jaulin, Jean-Philippe, 78800 Houilles (FR)
(74) Mandataire: Camus, Olivier Jean-Claude

(56) Documents cités:
- FR-A- 2 839 837
- US-A- 5 542 105
- US-A1- 2004 192 403
- US-B1- 6 236 868

## Description

La présente invention concerne un téléphone mobile et son utilisation. L'invention a pour but de faciliter une utilisation d'un téléphone mobile, en la rendant plus flexible et plus intuitive. La présente invention trouve une application particulièrement avantageuse, dans le domaine des téléphones de type DECT (Digital European Communication Telephone), mais elle pourrait aussi être utilisée avec n'importe quel téléphone mobile rechargeable sur un socle, voire avec des téléphones classiques.

Les téléphones de type DECT, ou téléphone DECT, comportent un combiné mobile et un socle pour recevoir et recharger le combiné. Ce socle et ce combiné échangent entre eux des signaux électromagnétiques. Ce type de téléphone confère à un signal de son une bonne qualité d'écoute et permet notamment à un utilisateur de s'affranchir du fil qui relie habituellement le combiné au socle.

Les téléphones DECT possèdent généralement un grand nombre de fonctionnalités qui leurs sont intégrées. En effet, dans le commerce, on peut trouver des téléphones DECT comportant une fonctionnalité d'appel main libres, de répondeur, ou encore de transfert d'appel vers un opérateur.

Des raccourcis de plusieurs types peuvent être prévus sur le téléphone pour accéder rapidement aux fonctionnalités les plus utilisées. En effet, ces raccourcis peuvent consister en des touches particulières dédiées à une fonctionnalité donnée. En appuyant sur une touche donnée, un utilisateur peut par exemple activer ou désactiver un répondeur. La fonctionnalité associée à une touche est généralement définie par un constructeur du téléphone, mais on connaît des téléphones où un utilisateur est autorisé à définir la fonctionnalité qu'il souhaite assigner à une touche de raccourci.

Certains téléphones, comme ceux décrits dans les demandes FR 2 839 837 A ou US 2004/192403 A1, activent une fonctionnalité spécifique suite à la détection de leur mise en place dans un support.

Pour d'autres téléphones, ces raccourcis peuvent consister en des actions de raccourcis. En effet, à une même touche peut correspondre plusieurs fonctionnalités et en fonction de la manière dont l'utilisateur appuie sur cette touche, la fonctionnalité exécutée par le téléphone est différente. Dans un exemple, une touche appuyée plus ou moins longtemps par rapport à une durée seuil peut enclencher des fonctionnalités différentes.

Enfin, dans certains téléphones, des fonctionnalités peuvent être activées en raccourci à la faveur de commandes vocales définies soit par l'utilisateur, soit par le constructeur du téléphone.

Toutefois, l'utilisation de ces raccourcis peut s'avérer compliquée car les touches ou les actions de raccourcis sont souvent difficiles à identifier et à configurer le cas échéant. La plupart du temps, ces difficultés obligent donc un utilisateur à lire une notice pour découvrir le fonctionnement des raccourcis du téléphone.

En outre, lorsque l'utilisateur veut vérifier qu'une fonctionnalité donnée a bien été activée, un utilisateur doit s'approcher du téléphone afin de recevoir un signal lumineux et ou sonore lui indiquant l'état d'activation d'une fonctionnalité. Comme dans la plupart des cas, un téléphone émet plusieurs signaux servant à indiquer un état de marche du téléphone, l'utilisateur pourra avoir du mal à identifier le signal correspondant à la fonctionnalité du téléphone dont il souhaite connaître l'état d'activation. Dans un exemple, un écran du combiné est tellement surchargé qu'il est difficile pour un utilisateur d'identifier un symbole correspondant à l'état d'activation du répondeur.

Dans certains cas, le téléphone n'émet pas de signaux à destination de l'utilisateur. L'utilisateur est alors obligé de naviguer à travers des menus du téléphone afin d'accéder à l'information relative à la fonctionnalité dont il souhaite connaître l'état d'activation. Une telle navigation, pour qui n'est pas habitué, peut rapidement devenir fastidieuse.

La présente invention se propose donc notamment de faciliter l'activation et la désactivation d'une fonctionnalité, et de faciliter la vérification de son activation.

A cette fin, le combiné du téléphone selon l'invention enclenche des fonctionnalités différentes suivant la position que ce combiné occupe lorsqu'il est posé sur son socle. Plus précisément, dans l'invention, le combiné est autorisé à prendre différentes positions, appelées généralement positions de charge, sur le socle lorsqu'il est en charge. Dans l'invention, le téléphone est configuré en fonction de la position de charge du combiné.

Ainsi, lorsque le téléphone se trouve dans une première position de charge (ou pas de charge), un répondeur pourra par exemple être activé alors que dans une deuxième position de charge (ou pas de charge), ce répondeur ne sera pas activé mais une commande mains libres pourrait par exemple l'être. Ainsi, un utilisateur pourra facilement configurer son téléphone et identifier visuellement la fonctionnalité rien que par la position du combiné sur le socle. C'est plus simple.

Dans une première réalisation de l'invention, on détecte la position du combiné sur son socle de manière purement électronique. En effet, dans cette réalisation, on mesure une tension observable entre deux contacts du combiné et en fonction du signe de cette tension, on détecte la position du téléphone.

Dans une deuxième réalisation, on détecte la position du combiné, d'une manière mettant en oeuvre des éléments mécaniques et des éléments électroniques. En effet, dans cette deuxième réalisation, pour détecter une position du combiné sur le socle, le socle comporte trois bornes et le combiné comporte alors des moyens pour mesurer un courant.

L'invention concerne donc un procédé d'utilisation d'un téléphone mobile comportant un combiné mobile muni d'une batterie et un socle muni d'un générateur électrique, ce socle permettant de recevoir et de charger électriquement le combiné, ce procédé comportant l'étape suivante:
- on place le combiné sur le socle, dans une position de charge, de manière à ce que des contacts du combiné reliés à la batterie soient en regard de bornes du socle reliées au générateur,
   caractérisé en ce que
- on prévoit plusieurs positions de charge,
- on détecte la position de charge dans laquelle le combiné se trouve, et
- en fonction de la position de charge du combiné, on configure une utilisation du combiné.
   L'invention a également pour objet un téléphone mobile comportant un combiné mobile et un socle,
- ce combiné mobile comportant une batterie électrique rechargeable, et des contacts,
- ces contacts étant reliés à la batterie et étant destinés à entrer en coopération avec des bornes du socle lorsque le combiné se trouve dans une position de charge contre ce socle,
- ces bornes étant reliées à un générateur de tension,
   caractérisé en ce qu'il comporte
- des moyens pour détecter une position du combiné parmi plusieurs positions autorisées, et
- des moyens pour configurer une utilisation du téléphone en fonction de la position détectée.

L'invention sera mieux comprise à la lecture de la description qui suit et à l'examen des figures qui l'accompagnent. Ces figures ne sont présentées qu'à titre indicatif et nullement limitatif de l'invention. Ces figures montrent :
- Figures 1a et 1 b : des vues en trois dimensions de positions, notamment de charge, du téléphone selon l'invention en fonction desquels des fonctionnalités différentes du téléphone peuvent être activées ;
- Figures 2a et 2b : des représentations schématiques d'un téléphone selon l'invention comportant des moyens électroniques pour détecter la position, notamment de charge, du téléphone ;
- Figure 3 : une représentation schématique d'un téléphone selon l'invention comportant un socle à trois bornes pour détecter la position, notamment de charge du téléphone.

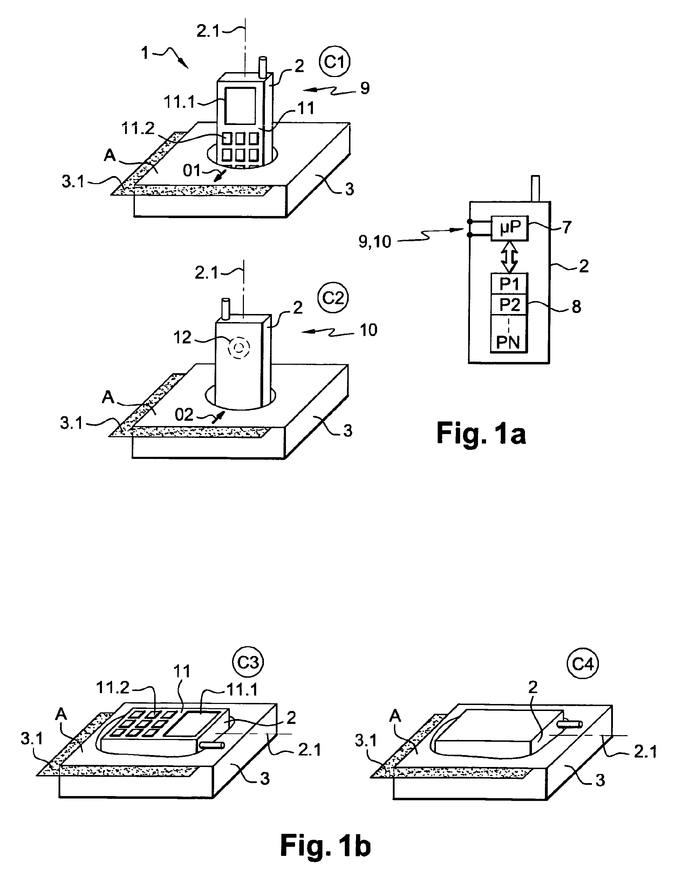

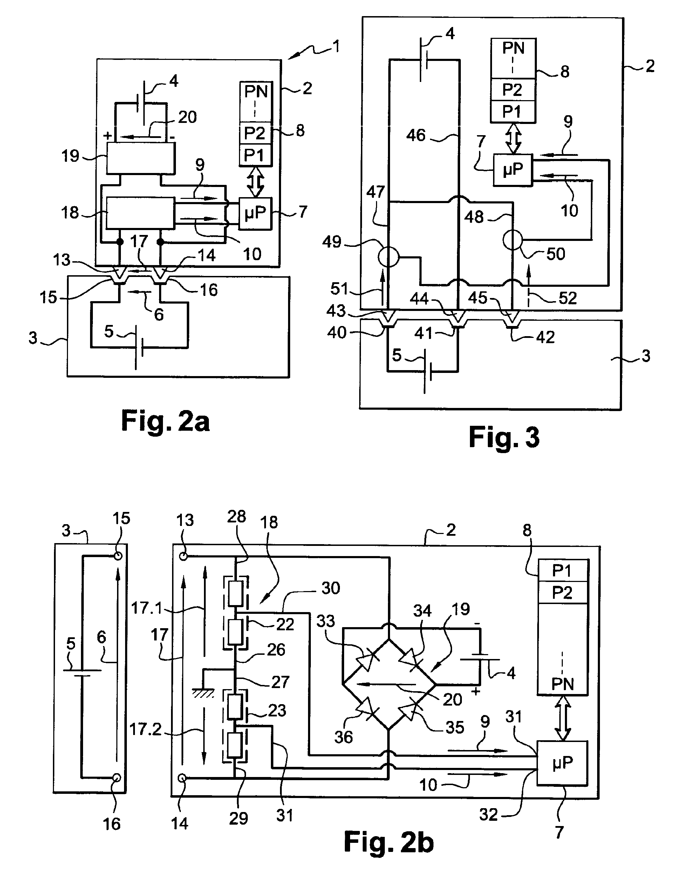

La figure 1a montre un téléphone 1 mobile selon l'invention comportant un combiné 2 et un socle 3. Le combiné 2 est mobile et comporte une batterie (référencée 4 sur les figures 2 et 3) électrique rechargeable. Le socle 3 comporte un générateur électrique (référencé 5 dans les figures 2 et 3). Notamment le combiné 2 est en relation avec le socle 3 jouant un rôle de base téléphonique par des voies hertziennes. Le socle 3 jouant le rôle de base est par exemple relié par ailleurs à un réseau téléphonique commuté par l'intermédiaire d'une ligne d'abonné, voire par l'intermédiaire d'un autocommutateur privé (non représenté). En variante, le socle 3 est relié à un réseau Ethernet ou à un réseau RNIS (Réseau Numérique à Intégration de Services), de manière à transmettre et recevoir des signaux sonores sous forme de blocs de données, tels que des paquets utilisés dans le protocole Internet appelés aussi paquets lP. Le socle 3 est capable de recevoir et de recharger la batterie 4 du combiné 2, lorsque ce combiné 2 se trouve, contre ou sur le socle 3, dans une position de charge.

Cette position de charge correspond à une position dans laquelle se trouve le combiné 2 lorsque des contacts (non représentés) de ce combiné reliés à la batterie coopèrent électriquement avec des bornes (non représentées) du socle reliées au générateur 5. Le combiné 2 comporte un système d'exploitation muni d'un microprocesseur 7 et d'une mémoire 8 programme. La mémoire 8 comporte des programmes P1-PN. Une fonctionnalité du téléphone est associée à certains, voire à chacun de ces programmes.

Une fonctionnalité est par exemple une écoute mains libres. Dans un tel exemple, un utilisateur échange des signaux sonores avec le combiné 2 alors que ce combiné 2 est posé sur le socle 3. Le microprocesseur 7 organise alors des émissions de signaux de commande, de manière à ce qu'un haut-parleur du combiné 2 soit plus puissant et qu'un microphone du combiné 2 soit plus sensible, par rapport à une utilisation de ce combiné 2 lorsqu'il est décroché.

D'autres fonctionnalités, comme par exemple des modes silence, répondeur ou de transferts d'appel vers un opérateur peuvent aussi être envisageables. Le mode silence correspond à un mode dans lequel le téléphone 1 n'émet aucune sonnerie lorsqu'il reçoit un appel.

Dans la réalisation particulière de l'invention, le socle 3 comporte une face A de référence. Le socle 3 peut comporter par exemple sur cette face de référence un symbole pour différencier la face A de référence de ses autres faces. Le socle 3 comporte surtout sur cette face A de référence une forme précisément complémentaire d'une forme du combiné 2. Cette forme complémentaire autorise ce combiné 2 à ne prendre, qu'une, que des, positions de charge bien définies. L'utilisateur peut donc naturellement poser son combiné 2 sur la face A de référence, dans un réceptacle du socle qui accueille bien ce combiné 2. Dans l'invention, il y a plusieurs positions d'accueil possible pour le combiné 2. Par ailleurs, chacune de ces positions possibles est associée à une utilisation, une fonctionnalité particulière du combiné 2 et ou du téléphone 1. En pratique, l'utilisateur peut ainsi toujours repérer la position du combiné 2 par rapport à la face A de référence, afin de bien distinguer la fonctionnalité enclenchée par le combiné 2 ou le téléphone 1.

Dans une première position C1, notamment de charge, une face 11 du combiné 2 portant un écran 11.1 et un clavier 11.2 débouche avec une première orientation O1 de sa face 11 par rapport à la face A de référence. Un axe 2.1 du combiné qui passe par le milieu de ses deux extrémités les plus éloignées est par exemple perpendiculaire ou légèrement incliné sur un plan 3.1 du socle 3. Ce plan 3.1 est parallèle à un support sur lequel ce socle 3 est posé. Dès que l'utilisateur pose le combiné 2 dans cette première position C1 de charge, le microprocesseur 7 reçoit un premier signal 9 de position sur une de ses entrées. Le microprocesseur 7 exécute alors des premiers programmes parmi les programme P1-PN correspondant à des premières fonctionnalités du combiné 2. Il sera vu plus loin comment est élaboré le signal 9 de position.

Dans une deuxième position C2, l'axe 2.1 du combiné 2 est toujours perpendiculaire au plan du socle 3 mais la face 11 du combiné débouche sur la face A de référence avec une orientation 02 opposée à l'orientation 01 de la position C1. Dès que l'utilisateur pose le combiné 2 dans cette deuxième position C2 de charge, le microprocesseur 7 reçoit un deuxième signal 10 de position sur une de ses entrées et il exécute des deuxièmes programmes parmi les programmes P1-PN correspondant à des deuxièmes fonctionnalités du combiné 2.

Par la suite, on parlera de positions de charge parce que, de préférence, dans chaque position il peut être prévu de recharger la batterie du combiné 2. Cependant, il serait possible qu'une ou plusieurs des positions d'accueil ne soient pas des positions de charge.

Les signaux 9 et 10 sont émis par des moyens de détection (non représentés) qui peuvent se trouver soit à l'intérieur du combiné 2, soit à l'intérieur du socle 3. En variante, le microprocesseur 7 et les mémoires 8 programmes se situent à l'intérieur du socle 3.

Conformément à l'invention, les premières et deuxièmes fonctionnalités correspondent à deux configurations différentes du téléphone. Ainsi dans un exemple, un utilisateur active un répondeur intégré au combiné 2 en plaçant le combiné 2 dans la deuxième position C2 de charge et le désactive lorsqu'il le place dans la première position C1 de charge.

Pour les téléphones munis d'une caméra 12 numérique montée sur la face opposée à la face 11, un utilisateur pourra activer une fonctionnalité de vidéosurveillance en plaçant le combiné 2 dans la deuxième position C2 de charge et la désactiver en le plaçant dans la première C1 position de charge. Dans cet exemple, la deuxième position C2 de charge sera définie, de manière à donner à la caméra 12 le plus grand champ de vision possible.

Les fonctionnalités associées à chaque position de charge du téléphone 1 peuvent être définies par un utilisateur au moment d'une configuration de ce téléphone 1 ou prédéfinie par un constructeur. La liste des fonctionnalités qui peuvent être associées à une position de charge ne se limite pas aux fonctionnalités qui sont citées ici.

Bien entendu, après l'exécution des premiers ou des deuxièmes programmes, ou bien concomitamment à cette exécution, le combiné 2 entre dans une phase de charge, lorsque la position est une position de charge vraie.

La figure 1b montre des variantes dans les positions de charge que peut prendre le combiné 2. Dans une troisième position C3 de charge, l'axe 2.1 du combiné 2 est parallèle au plan 3.1 du socle 3 et la face 11 débouche d'un côté opposé à la face A de référence. Dans une quatrième position C4, l'axe 2.1 du combiné 2 est parallèle au plan du socle 3 et la face 11 est plaquée contre la face A de référence. Là encore, le téléphone 1 est configuré en fonction de la position de charge adoptée par le combiné 2 sur le socle 3.

Dans la figure 1a et la figure 1b, le combiné 2 peut prendre deux positions de charge, toutefois, dans le cas général, le combiné 2 peut prendre N positions de charge différentes sur le socle 3. Le téléphone 1 exécute alors des fonctionnalités différentes d'une position à l'autre. Dans ce cas, le socle 3 possède par exemple les positions d'accueil C1 à C4 ci dessus.

La figure 2a montre une architecture d'un téléphone 1 selon l'invention autorisant le combiné 2 à prendre deux positions de charge. Ici le combiné 2 comporte un premier contact 13 et un deuxième contact 14 reliés à des entrées d'un circuit électronique 18 de détection. Des sorties de ce circuit 18 sont reliées à des entrées du microprocesseur 7. Les contacts 13 et 14 sont aussi reliés à un élément 19 redresseur, tel qu'un pont de diodes ou un pont de thyristors. L'élément 19 redresseur est relié à la batterie 4 du téléphone. Le microprocesseur 7 est relié aux mémoires programmes 8. Le socle 3 comporte ici une première borne 15 et une deuxième borne 16 reliées respectivement à une borne positive du générateur 5 et à une borne négative du générateur 5.

Un signal 6 de tension, continue continu dans un exemple préféré, est observable entre cette première borne 15 et cette deuxième borne 16. Un signal 17 de tension observable entre le premier contact 13 et le deuxième contact 14 est appliqué sur les entrées du circuit 18 de détection. En fonction du signe de la tension de ce signal 17, le circuit 18 émet des signaux 9 et 10 de position d'un niveau donné et permet ainsi de détecter la position de charge prise par le combiné 2 sur le socle 3.

En effet, dans une première position de charge, le premier contact 13 et le deuxième contact 14 sont respectivement en regard de la première borne 15 et de la deuxième borne 16. Le signal 17 est alors positif et des signaux 9 et 10 comportant des premiers niveaux sont émis à destination du microprocesseur 7 qui exécute des premiers programmes. Dans la deuxième position de charge, le premier contact 13 et le deuxième contact 14 sont respectivement en regard de la deuxième borne 16 et de la première borne 15. Le signal 17 est alors négatif et des signaux 9 et 10 comportant des deuxièmes niveaux sont émis à destination du microprocesseur 7 qui exécute des deuxièmes programmes.

Le signal 17 de tension est appliqué sur des bornes de l'élément 19 afin de s'assurer qu'un signal de tension 20 appliqué entre les bornes négative et positive de la batterie 4 soit toujours positif.

La figure 2b montre un exemple de réalisation possible du téléphone 1 de la figure 2a. Dans cette réalisation, l'élément 19 redresseur est un pont de diodes et le circuit 18 de détection comporte deux ponts 22 et 23 de résistances. On notera que, dans l'invention, dans le cas où le générateur 5 est un générateur de tension continu, on interpose quand même dans le circuit de charge du combiné un redresseur 19.

Les ponts 22 et 23 comportent chacun deux résistances et sont reliés ensemble électriquement en série. Ces ponts 22 et 23 comportent chacun une première connexion 26, 27 extrême reliée à une masse 29. Cette masse 29 sert de potentiel électrique de référence par rapport à laquelle les potentiels et les tensions dont il sera question sont mesurés. Une deuxième connexion 28 extrême du premier pont 22 est reliée au premier contact 13, tandis qu'une deuxième connexion 29 extrême du deuxième pont 23 est reliée au deuxième contact 14. Une troisième connexion 30 commune aux deux résistances du premier pont 22 est reliée à une première entrée 31 du microprocesseur 7, tandis qu'une troisième connexion 31 commune aux deux résistances du deuxième pont 23 est reliée à une deuxième entrée 32 du microprocesseur 7.

Par ailleurs, les contacts 13 et 14 sont reliés au pont 19 de diodes. En effet, le premier contact 13 est relié à une cathode d'une première diode 33 et à une anode d'une deuxième diode 34. Le deuxième contact 14 est relié à une anode d'une troisième diode 35 et à une cathode d'une quatrième diode 35.

La batterie 4 est aussi reliée au pont de diodes 19. En effet, la borne positive de cette batterie 4 est reliée à une anode de la première diode 33 et à une anode de la quatrième diode 36. La borne négative de cette batterie 4 est reliée à une cathode de la deuxième diode 34 et à une cathode de la troisième diode 35.

Un signal 6 de tension continue positif est toujours observable entre la première et la deuxième borne 15, 16 reliées au générateur 5. Le signal 17 de tension est toujours observable entre le premier et le deuxième contact 13, 14 du combiné 2. Un premier signal 17.1 de pont est observable entre le premier contact 13 et la masse. Un deuxième signal 17.2 de pont est observable entre le deuxième contact 14 et la masse.

Le premier signal 9 de position est observable entre la troisième connexion 30 du premier pont 22 et la masse. Ce premier signal 9 correspond au premier signal 17.1 de pont multiplié par un premier rapport du premier pont 22. Le deuxième signal 10 de position est observable entre la troisième connexion 31 du deuxième pont 23 et la masse. Ce deuxième signal 19 correspond au deuxième signal 17.2 de pont multiplié par un deuxième rapport du deuxième pont 23.

Ici, lorsque le combiné 2 se trouve dans la première position de charge, le signal 17 de tension est positif. Le premier signal 17.1 de pont est donc positif, tandis que le deuxième signal 17.2 électrique de pont est négatif. En conséquence, dans la première position de charge, le premier signal 9 électrique de position est positif, tandis que le deuxième signal 10 électrique de position est négatif.

Lorsque le combiné 2 se trouve dans la deuxième position de charge, la signal 17 de tension est négatif. Le premier signal 17.1 de pont est donc négatif, tandis que le deuxième signal 17.2 électrique de pont est positif. En conséquence, le premier signal 9 électrique de position observable sur la troisième connexion de ce premier pont est négatif tandis que le deuxième signal 10 électrique de position est positif.

En fonction du signe des signaux 9 et 10 de position qu'il reçoit, le microprocesseur 7 peut donc détecter la position de charge du combiné 2 sur le socle 3 et exécuter ainsi les programmes correspondant à cette position de charge.

Les rapports des premier et deuxième ponts 22 et 23 sont choisis, de manière à ce que les signaux 9 et 10 de positions possèdent des niveaux compatibles avec la technologie du microprocesseur 7 utilisé. Dans un exemple, on choisit des ponts 22 et 23 possédant un même rapport.

En variante, la borne négative du générateur 5 correspond à la masse et les signaux de position 9 et 10 sont soit nuls, soit non nul.

Le pont 19 permet de redresser le signal 17 de tension qui lui est appliqué en le transformant en un signal 20 de tension. Ce signal 20 est observable entre la borne négative et la borne positive de la batterie 4 et est toujours positif.

A cette fin, lorsque le combiné 2 se trouve dans la première position de charge et que la tension 17 est positive, les diodes 34 et 36 sont passantes. Un premier courant peut alors s'établir dans un circuit composé du générateur 5, des diodes 34 et 36, et de la batterie 4. Ce premier courant est émis par la borne positive du générateur 5, puis traverse la deuxième diode 34, puis traverse la batterie 4 de sa borne positive vers sa borne négative, puis traverse la quatrième diode 36 pour ensuite retourner vers la borne négative du générateur 5.

Lorsque le combiné se trouve dans la deuxième position de charge et que la tension 17 est négative, les diodes 33 et 35 sont passantes. Un deuxième courant peut alors s'établir dans un circuit composé du générateur 5, des diodes 33 et 36, et de la batterie 4. Ce deuxième courant est émis par la borne positive du générateur 5, puis traverse la troisième diode 35, puis traverse la batterie 4 de sa borne positive vers sa borne négative, puis traverse la première diode 33 pour ensuite retourner vers la borne négative du générateur 5.

La batterie 4 peut ainsi être chargée de manière correcte, quelle que soit la position du combiné 2 sur le socle 3. En effet, le premier ou le deuxième courant traverse toujours la batterie 4 de sa borne positive vers sa borne négative.

En variante, un seul des deux ponts 22, 23 diviseur est utilisé. Dans cette variante, la valeur du signal 9 ou 10 observable sur la troisième connexion du pont 22 ou 23 est soit positive, soit négative. Suivant le signe de la valeur du signal 9 ou 10, le microprocesseur 7 détecte donc la position de charge du combiné 2 et exécute des programmes parmi les programmes P1-PN correspondant à cette position de charge.

La figure 3 montre un autre exemple de réalisation du téléphone 1 selon l'invention. Dans cette réalisation, le socle 3 trois comporte trois bornes 40-42. La première borne 40 est reliée à la borne positive du générateur 5 de tension continu, la deuxième borne 41 est reliée à la borne négative du générateur 5 de tension continue, et la troisième borne 42 n'est reliée à aucun élément électrique du socle 3.

Le combiné 2 comporte ici trois contacts 43 et 45 destinés à entrer en coopération électrique avec les trois bornes 40-42 précitées. Le premier contact 43 et le troisième contact 45 sont reliés à la borne positive de la batterie 4, respectivement par l'intermédiaire d'une première liaison 47 filaire et d'une deuxième liaison 48 filaire distinctes. Un premier moyen 49 et un deuxième moyen 50 de mesure de courant sont respectivement connectés sur cette première et cette deuxième liaison 47 et 48 liaison filaire. Ces moyens 49 et 50 de mesure émettent un signal de position non nul lorsqu'ils sont traversés par un courant, et un signal électrique de position nul lorsqu'ils ne sont pas traversés par un courant. Le signal 9 de position et le signal 10 de position sont appliqués là encore sur des entrées du microprocesseur 7 relié à la mémoire 8 programme. Dans un exemple, ces moyens 49 et 50 peuvent prendre la forme d'un ampèremètre.

Dans cette réalisation, un utilisateur est autorisé à poser le combiné 2 dans deux positions de charge sur le socle 3. Dans ces deux positions, la borne 44 est toujours en regard du contact 41 mais la borne 40 peut être soit en regard du premier contact 43, soit en regard du deuxième contact 45.

Ainsi, dans une première position de charge qui correspond à celle représentée, les contacts 43-45 sont respectivement en regard des bornes 40-42. Un premier courant 51 circule alors à l'intérieur d'un circuit composé du générateur 5, du premier moyen 49 de mesure et de la batterie 4. En effet, le courant 51 est émis par la borne positive du générateur 5, puis traverse le moyen 49, puis la batterie 4 de sa borne positive vers sa borne négative, pour revenir enfin vers la borne négative du générateur 5.

Dans la deuxième position de charge, les contacts 43-45 sont respectivement en regard des bornes 42, 41 et 40. Un deuxième courant 52 circule alors à l'intérieur d'un circuit composé du générateur 5, du deuxième moyen 50 de mesure et de la batterie 4. En effet, le courant 52 est émis par la borne positive du générateur 5 puis traverse le deuxième moyen 50, puis la batterie 4 de sa borne positive vers sa borne négative, pour revenir enfin vers la borne négative du générateur 5.

Le microprocesseur 7 exécute des programmes P1-PN en fonction des signaux de position qu'il reçoit. Dans la première position de charge, le microprocesseur 7 reçoit un premier signal 9 de position non nul et un deuxième signal 10 de position nul, puisque seul le premier moyen 49 est parcouru par le courant 51. Le microprocesseur 7 exécute alors des premiers programmes correspondant à la première position.

Dans la deuxième position de charge, le microprocesseur 7 reçoit un premier signal 9 de position nul et un deuxième signal 10 de position non nul, puisque seul le deuxième moyen 50 est parcouru par le courant 52. Le microprocesseur 7 exécute alors des deuxièmes programmes, de préférence différents des premiers programmes, et correspondant à la deuxième position de charge.

Dans cette réalisation, on peut prévoir d'autres positions d'accueil dans lesquelles certaines seulement des bornes 40-42 du socle sont en contact avec certains des contacts 43-45 du combiné. Dans ce cas, ces bornes 40-42 sont dupliquées pour correspondre à ces autres positions. Dans ce cas également, on se sert de ceux des bornes 40-42 seulement alimentés pour charger (ou non) le combiné 2 et détecter sa position.

En variante, un seul des deux moyens 49, 50 est relié sur une des deux liaisons 47, 48 filaires. Dans cette variante, lorsque le combiné 2 se trouve dans la position de charge où le moyen 49 ou 50 est traversé par un courant, un signal de position 9 ou 10 de valeur particulière est émis à destination du microprocesseur 7. En revanche, lorsque le combiné 2 se trouve dans la position de charge où le moyen 49 ou 50 n'est traversé par aucun courant, un signal de position 9 ou 10 de valeur nul ou aucun signal de position n'est émis à destination du microprocesseur 7. Ainsi, en fonction de la valeur du signal de position 9 ou 10 ou de son absence de valeur, le microprocesseur 7 détecte la position de charge du combiné 2 et exécute là encore des programmes parmi les programmes P1-PN correspondant à cette position de charge.

## Revendications

1. Procédé d'utilisation d'un téléphone (1) mobile comportant un combiné (2) mobile muni d'une batterie (4) et un socle (3) muni d'un générateur (5) électrique, ce socle (3) permettant de recevoir et de charger électriquement le combiné (2), ce procédé comportant l'étape suivante:
- on place le combiné sur le socle (3), dans une position de charge, de manière à ce que des contacts du combiné reliés à la batterie (4) soient en regard de bornes du socle (3) reliées au générateur (5),
**caractérisé en ce que**
- on prévoit plusieurs positions (C1, C2) de charge,
- on détecte la position de charge dans laquelle le combiné (2) se trouve, et
- en fonction de la position (C1, C2) de charge du combiné, on configure une utilisation du combiné.

2. Procédé selon la revendication 1 **caractérisé en ce que** pour détecter,
- on place un premier et un deuxième contact (13, 14) du combiné en regard de deux bornes (15, 16) du socle (3) entre lesquelles un signal (6) de tension continu est observable, et
- on mesure un signal de tension (17) entre le premier et le deuxième contact (13, 14), et
- on détecte la position (C1, C2) de charge en fonction de la mesure.

3. Procédé selon l'une des revendications 1 à 2 **caractérisé en ce**
- on place un premier, un deuxième et un troisième contact (43-45) du combiné (2) en regard d'une première, une deuxième et une troisième borne (40-42) du socle (3), et
- on détecte la position de charge en fonction de la position des contacts (43-45) par rapport aux bornes (40-42).

4. Procédé selon l'une des revendications 1 à 3 **caractérisé en ce que** dans une utilisation configurée, le téléphone (1) active une des fonctionnalités suivantes :
- vidéo surveillance,
- répondeur,
- mode silence,
- décroché mains libres.

5. Téléphone (1) mobile comportant un combiné (2) mobile et un socle (3),
- ce combiné (2) mobile comportant une batterie (4) électrique rechargeable, et des contacts,
- ces contacts étant reliés à la batterie (4) et étant destinés à entrer en coopération avec des bornes du socle (3) lorsque le combiné se trouve dans une position de charge contre ce socle (3),
- ces bornes étant reliées à un générateur (5) de tension,
**caractérisé en ce qu'**il comporte
- des moyens pour détecter une position du combiné parmi plusieurs positions (C1, C2) autorisées, et
- des moyens (7, 8) pour configurer une utilisation du téléphone en fonction de la position détectée.

6. Téléphone selon la revendication 5 **caractérisé en ce que**
- le socle (3) comporte deux bornes (13, 14) entre lesquelles un signal (6) de tension continu est observable et le combiné (2) comporte deux contacts (13, 14).

7. Téléphone selon l'une des revendications 5 à 6 **caractérisé en ce qu'**il comporte un pont (19) de diodes relié au premier contact (13), au deuxième contact (14), et à des bornes positive et négative de la batterie (4).

8. Téléphone selon l'une des revendications 5 à 7 **caractérisé en ce que** les moyens (18) pour détecter sont des moyens pour détecter si un signal (17) de tension observable entre le premier et le deuxième contact (13, 14) est positif ou négatif.

9. Téléphone selon la revendication 8 **caractérisé en ce que**
- les moyens (18) pour détecter consistent en un premier et / ou un deuxième pont (22, 23) diviseur de tension, ce premier et / ou ce deuxième pont (22, 23) comportant chacun
- une première connexion (26, 27) extrême reliée à une masse,
- une deuxième connexion (28, 29) extrême reliée à un des contacts, et
- une troisième connexion (30, 31) intermédiaire reliée à une entrée (31, 32) du microprocesseur (7).

10. Téléphone selon l'une des revendications 5 à 9 **caractérisé en ce que**
- le socle (3) comporte une première borne (40) reliée à une borne positive du générateur (5), une deuxième borne (41) reliée à une borne négative du générateur (5) et une troisième borne (42) reliée à aucun élément électronique du socle 3,
- le combiné (2) comporte un premier contact (43) relié à une borne positive de la batterie (4) par l'intermédiaire d'une première liaison (47) filaire, un deuxième contact (44) relié à une borne négative de la batterie (4) et un troisième contact (45) relié à une borne positive de la batterie (4) par l'intermédiaire d'une deuxième liaison (48) filaire.

11. Téléphone selon la revendication 10 **caractérisé en ce qu'**il comporte un premier et / ou un deuxième moyen (49, 50) pour mesurer des courants, ce premier et / ou ce deuxième moyen (49, 50) étant connectés sur la première et / ou la deuxième liaison (47, 48) filaire.

12. Téléphone selon l'une des revendications 5 à 11 **caractérisé en ce qu'**il comporte une caméra (12) montée sur une face du combiné opposée à celle portant un écran (11).

13. Téléphone selon l'une des revendications 5 à 12 **caractérisé en ce que** le socle (3) comporte des moyens pour différencier une face (A) de référence de ses autres faces.

## Claims

1. Process for the use of a mobile telephone (1) comprising a mobile handset (2) equipped with a battery (4) and a base (3) equipped with an electric generator (5), this base (3) enabling the reception and electrical recharging of the handset (2), this process including the following step:
- the handset is placed on the base (3), in a recharge position, in such a way that the position of contacts on the handset connected to the battery (4) matches that of terminals on the base (3) linked to the generator (5),
wherein
- several recharge positions (C1, C2) are provided for,
- the recharge position of the handset (2) is detected, and
- depending on the handset's recharge position (C1, C2), the use of the handset is configured.

2. Process as set forth in claim 1 wherein detection is achieved as follows,
- a first and second contact (13, 14) of the handset are positioned to match up with the terminals (15, 16) of the base (3) between which a continuous voltage signal (6) can be observed, and
- a voltage signal (17) between the first and second contacts (13, 14) is measured, and
- the charge position (C1, C2) is detected from the measurement.

3. Process as set forth in one of the claims 1 to 2 wherein
- first, second and third contacts (43-45) of the handset (2) are placed facing the first, second and third terminals (40-42) on the base (3), and
- the charge position depending on the position of the contacts (43-45) relative to the terminals (40-42) is detected.

4. Process as set forth in one of the claims 1 to 3 wherein, in a configured use, the telephone (1) activates one of the following functionalities:
- video-surveillance,
- answering machine,
- silent mode,
- hands-free off-hook.

5. Mobile telephone (1) comprising a mobile handset (2) and a base (3),
- this mobile handset (2) comprising a rechargeable electric battery (4), and contacts,
- these contacts being connected to the battery (4) and being designed to enter into cooperation with terminals in the base (3) when the handset is in a charge position against this base (3),
- these terminals being connected to a voltage generator (5),
wherein it contains
- the means of detecting one of several authorised handset positions (C1, C2), and
- the means (7, 8) of configuring a use of the telephone according to the detected position.

6. Telephone as set forth in claim 5 wherein
- the base (3) contains two terminals (13, 14) between which a continuous voltage signal (6) can be observed and the handset (2) comprises two contacts (13, 14).

7. Telephone as set forth in one of the claims 5 to 6 wherein it comprises a bridge (19) of diodes connected to the first contact (13), the second contact (14), and to the negative and positive terminals on the battery (4).

8. Telephone as set forth in one of the claims 5 to 7 wherein the means used (18) for detection are means for detecting whether a voltage signal (17) observable between the first and second contacts (13, 14) is positive or negative.

9. Telephone as set forth in claim 8 wherein
- the means (18) of detection are made up of a first and / or a second voltage divider bridge (22, 23), the first and / or second bridge (22, 23) each comprising:
- a first end connection (26, 27) connected to an earth,
- a second end connection (28, 29) connected to contacts, and
- a third intermediary connection (30, 31) connected to an input (31, 32) to the microprocessor (7).

10. Telephone as set forth in one of the claims 5 to 9 wherein
- the base (3) contains a first terminal (40) connected to a positive terminal on the generator (5), a second terminal (41) connected to a negative terminal on the generator (5) and a third terminal (42) not connected to any element on the base 3,
- the handset (2) comprises a first contact (43) connected to a positive terminal on the battery (4) via a first wire connection (47), a second contact (44) connected to a negative terminal on the battery (4) and a third contact (45) connected to a positive terminal on the battery (4) via a second wire connection (48).

11. Telephone as set forth in claim 10 wherein it has a first and / or a second means (49, 50) of measuring currents, this first and / or the second means (49, 50) being connected to the first and / or second wire connection (47, 48).

12. Telephone as set forth in one of the claims 5 to 11 wherein it comprises a camera (12) mounted on one side of the handset opposite a side equipped with a screen (11).

13. Telephone as set forth in one of the claims 5 to 12 wherein the base (3) has means for differentiating between a reference side (A) and the other sides.

## Patentansprüche

1. - Verwendungsart eines Mobiltelefons (1) mit einem mit einer Batterie (4) ausgestatteten mobilen Sprechhörer (2) und einem mit einem elektrischen Generator (5) versehenen Sockel (3), wobei es der Sockel (3) ermöglicht, den Sprechhörer (2) aufzunehmen und elektrisch aufzuladen, wobei dieses Verfahren folgende Etappe beinhaltet:
- Man platziert den Sprechhörer in Ladeposition auf den Sockel (3), so dass sich an die Batterie (4) angeschlossene Kontakte des Sprechhörers an den Generator (5) angeschlossenen Klemmen des Sockels (3) gegenüber befinden,
**dadurch gekennzeichnet, dass**
- mehrere Ladepositionen (C1, C2) vorgesehen sind,
- die Ladeposition, in der sich der Sprechhörer (2) befindet, erfasst wird und
- je nach Ladeposition (C1, C2) des Sprechhörers eine Verwendung des Sprechhörers konfiguriert wird.

2. - Verfahren nach Anspruch 1, **dadurch gekennzeichnet, dass** man zur Erfassung
- einen ersten und einen zweiten Kontakt (13, 14) des Sprechhörers zwei Klemmen (15, 16) des Sockels (3) gegenüber platziert, zwischen denen ein Gleichspannungssignal (6) beobachtet werden kann, und
- ein Spannungssignal (17) zwischen dem ersten und dem zweiten Kontakt (13,14) misst und
- die Ladeposition (C1, C2) anhand der Messung erfasst.

3. - Verfahren nach einem der vorherigen Ansprüche, **dadurch gekennzeichnet, dass**
- man einen ersten, einen zweiten und einen dritten Kontakt (43-45) des Sprechhörers (2) einer ersten, einer zweiten und einer dritten Klemme (40-42) des Sockels (3) gegenüber platziert und
- die Ladeposition anhand der Position der Kontakte (43-45) im Vergleich zu den Klemmen (40-42) erfasst.

4. - Verfahren nach einem der vorherigen Ansprüche, **dadurch gekennzeichnet, dass** bei einer konfigurierten Verwendung das Telefon (1) eine der folgenden Funktionen aktiviert:
- Videoüberwachung,
- Anrufbeantworter,
- Mute-Funktion,
- Freisprechfunktion.

5. - Mobiltelefon (1) mit einem mobilen Sprechhörer (2) und einem Sockel (3),
- wobei dieser mobile Sprechhörer (2) eine aufladbare elektrische Batterie (4) und Kontakte beinhaltet,
- welche an die Batterie (4) angeschlossen und dazu bestimmt sind, mit den Klemmen des Sockels (3) zu kooperieren, wenn sich der Sprechhörer in einer Ladeposition auf diesem Sockel (3) befindet,
- wobei diese Klemmen an einen Spannungsgenerator (5) angeschlossen sind,
**dadurch gekennzeichnet, dass** er
- Mittel zur Erfassung einer von mehreren autorisierten Positionen (C1, C2) des Sprechhörers und
- Mittel (7, 8) enthält, um eine Verwendung des Telefons je nach der erfassten Position zu konfigurieren.

6. - Telefon nach Anspruch 5, **dadurch gekennzeichnet, dass**
- der Sockel (3) zwei Klemmen (13, 14) beinhaltet, zwischen denen ein Gleichsspannungssignal (6) zu beobachten ist, und der Sprechhörer (2) zwei Kontakte (13, 14) enthält.

7. - Telefon nach Anspruch 5 und 6, **dadurch gekennzeichnet, dass** es eine Diodenbrücke (19) enthält, die an den ersten Kontakt (13), den zweiten Kontakt (14) und den Plus- und Minuspol der Batterie (4) angeschlossen ist.

8. - Telefon nach Anspruch 5 bis 7, **dadurch gekennzeichnet, dass** es sich bei den Erfassungsmitteln (18) um Mittel handelt, mit denen erfasst werden kann, ob ein zwischen dem ersten und zweiten Kontakt (13, 14) beobachtbares Spannungssignal (17) positiv oder negativ ist.

9. - Telefon nach Anspruch 8, **dadurch gekennzeichnet, dass**
- die Erfassungsmittel (18) aus einer ersten und / oder zweiten Spannungstrennbrücke (22, 23) bestehen, wobei die erste und / oder zweite Brücke (22, 23) jeweils
- einen ersten Endanschluss (26, 27) enthält, die an eine Masse angeschlossen ist,
- einen zweiten Endanschluss (28, 29), der an einen der Kontakte angeschlossen ist, und
- einen dritten Zwischenanschluss (30, 31), der an einen Eingang (31, 32) des Mikroprozessors (7) angeschlossen ist.

10. - Telefon nach Anspruch 5 bis 9, **dadurch gekennzeichnet, dass**
- der Sockel (3) eine erste Klemme (40) beinhaltet, die an einen Pluspol des Generators (5) angeschlossen ist, eine zweite Klemme (41), die an einen Minuspol des Generators (5) angeschlossen ist, und eine dritte Klemme (42), die an kein elektronisches Element des Sockels 3 angeschlossen ist,
- der Sprechhörer (2) einen ersten Kontakt (43) beinhaltet, der über eine erste Drahtverbindung (47) mit einem Pluspol der Batterie (4) verbunden ist, einen zweiten Kontakt (44), der mit einem Minuspol der Batterie (4) verbunden ist, und einen dritten Kontakt (45), der über eine zweite Drahtverbindung (48) mit einem Pluspol der Batterie (4) verbunden ist.

11. - Telefon nach Anspruch 10, **dadurch gekennzeichnet, dass** es ein erstes und / oder ein zweites Mittel (49, 50) zur Strommessung beinhaltet, wobei dieses erste und / oder dieses zweite Mittel (49, 50) an die erste und / oder zweite Drahtverbindung (47, 48) angeschlossen ist.

12. - Telefon nach Anspruch 5 bis 11, **dadurch gekennzeichnet, dass** es an einer Seite des Sprechhörers gegenüber der Seite mit dem Bildschirm (11) eine Kamera (12) beinhaltet.

13. - Telefon nach Anspruch 5 bis 12, **dadurch gekennzeichnet, dass** der Sockel (3) Mittel enthält, um eine Bezugsseite (A) von den übrigen Seiten zu unterscheiden.
